# EUROPEAN PATENT SPECIFICATION

(11) **EP 3 179 605 B1**
(45) Date of publication and mention of the grant of the patent: **28.11.2018**
(21) Application number: 15198412.7
(22) Date of filing: 08.12.2015
(51) Int. Cl.: H02K 1/27, H02K 9/18, H02K 9/19, H02K 7/18

(54) **A ROTOR FOR AN ELECTRIC MACHINE**
ROTOR FÜR EINE ELEKTRISCHE MASCHINE
ROTOR POUR MACHINE ÉLECTRIQUE

(43) Date of publication of application: 14.06.2017
(73) Proprietor: ABB Schweiz AG, 5400 Baden (CH)
(72) Inventor: Raute, Rami, 00980 Helsinki (FI); Rinne, Vesa, 00380 Helsinki (FI); Vartiainen, Ari, 00380 Helsinki (FI); Lamberg, Mikael, 00380 Helsinki (FI)
(74) Representative: Kolster Oy Ab

(56) References cited:
- WO-A1-2010/070196
- DE-A1-102013 200 476
- US-A1- 2004 150 281
- US-A1- 2008 088 193

## Description

### FIELD OF THE INVENTION

The present invention relates to a rotor for an electric machine.

### BACKGROUND ART

US patent application 2008/0088193 discloses a rotor for a permanent magnet machine. Permanent magnets are fastened to a body structure of the rotor. The permanent magnets are used to create two or more poles spaced at essentially equal distances in the circumferential direction of the rotor. Each pole is implemented using two or more partial poles magnetised in the same direction. The partial poles are arranged sequentially in the circumferential direction of the rotor. The adjacent partial poles of each pole are located at a distance from each other. The pieces of permanent magnets are fastened onto the rotor using fastening means fitted at least between two adjacent partial poles.

A problem in a rotor for an electric machine provided with permanent magnet modules on the outer surface of the rotor is the attachment of the permanent magnet modules when the size of the permanent magnet modules are increased in the circumferential direction in order to reduce the number of poles of the electric machine. It is advantageous to reduce the pole number e.g. in an electric generator in a wind turbine in order to be able to keep the output frequency of the generator at a desired level. A generator in a wind turbine rotates with a speed in the range of 150 to 700 rpm. The generator is connected to the grid through a frequency converter. It might, however, be difficult to keep the frequency of the generator at the desired level e.g. at 50 Hz when the rotor rotates with a speed near the upper limit of 700 rpm. The solution is to use bigger permanent magnet modules and thereby less poles in the electric generator. A bigger permanent magnet module produces, however, bigger centrifugal forces on the cover compared to a smaller permanent magnet module when the rotor rotates. This means that the fastening of the permanent magnet module should be improved in order to withstand the bigger centrifugal forces.

### BRIEF DESCRIPTION OF THE INVENTION

An object of the present invention is an improved rotor for an electric machine.

The rotor for the electric machine according to the invention is characterized by what is stated in the independent claim 1.

The rotor has an axial direction and a transverse direction being perpendicular to the axial direction,
the rotor comprising an outer surface with an axial length, the outer surface of the rotor being provided with a plurality of rows of surface mounted permanent magnet modules distributed along a perimeter of the outer surface of the rotor, each row comprising at least one surface mounted permanent magnet module,
the permanent magnet module comprising a cover having a top part forming a compartment with a height in a radial direction,
the top part of the cover comprising at least one intermediate wall extending in the direction of the row or in the axial direction over the whole height of the compartment and dividing the compartment into at least two separate sub-compartments, each of the sub-compartments housing at least one permanent magnet,
the at least one intermediate wall extending below a lower surface of the top part into a groove formed in the rotor and comprising fastening means at a lower edge of the at least one intermediate wall within the groove in the rotor in order to attach the at least one intermediate wall to the rotor.

The invention solves the problem relating to the bigger centrifugal forces caused by the bigger size of the permanent magnet modules in the circumferential direction when the pole number of the electric machine is to be decreased at a given rotor diameter.

The solution to the problem is the division of the compartment within the top part of the cover into two sub-compartments with at least one intermediate wall extending below a lower surface of the top part into a groove formed in the rotor and comprising fastening means at a lower edge of the at least one intermediate wall within the groove in the rotor in order to attach the at least one intermediate wall to the rotor. The intermediate wall provided with the fastening means provide an additional attachment of the permanent magnet module to the rotor. The permanent magnet module is naturally also attached from the axially extending edges in a conventional way to the rotor. The at least one permanent magnet in each sub-compartment of the cover forms a partial pole. Each pole is thus formed of the permanent magnets in both sub-compartments.

There is no need to have access to the fastening means through the permanent magnet module from the top part of the cover of the permanent magnet module. The fastening means will pass into the rotor when the permanent magnet module is put in place on the outer surface of the permanent magnet module. This means that the intermediate wall can be made rather thin so that the opposed side edges of the permanent magnets in each sub-compartment can be positioned as near to each other as possible. Said side edges of the opposite permanent magnets are in contact with the intermediate wall at opposite sides of the intermediate wall. This is advantageous in view of reducing stray fluxes between the partial poles in the magnetic pole.

This arrangement of providing the cover of the permanent magnet module with at least one intermediate wall and the additional attachment of the permanent magnet module through the intermediate wall to the rotor makes it possible to raise the rotation speed of the rotor compared to a situation where no intermediate wall with first fastening means is used in the cover of the permanent magnet module.

This arrangement makes it also easier to adapt a rotor with a specific diameter to different pole numbers.

### BRIEF DESCRIPTION OF THE DRAWINGS

In the following the invention will be described in greater detail by means of preferred embodiments with reference to the attached drawings, in which
Figure 1 shows an axial cross section of an electric machine,
Figure 2 shows a radial cross section of a portion of the electric machine according to figure 1,
Figure 3 shows a first permanent magnet module for a rotor,
Figure 4 shows another view of the permanent magnet module of figure 3,
Figure 5 shows a radial cross section of a first fastening arrangement for the permanent magnet module of figures 3 and 4,
Figure 6 shows a radial cross section of a second fastening arrangement for the permanent magnet module of figures 3 and 4,
Figure 7 shows a radial cross section of a third fastening arrangement for the permanent magnet module of figures 3 and 4,
Figure 8 shows a radial cross section of a fourth fastening arrangement for the permanent magnet module of figures 3 and 4,
Figure 9 shows a radial cross section of a fifth fastening arrangement for the permanent magnet module of figures 3 and 4.

### DETAILED DESCRIPTION OF THE INVENTION

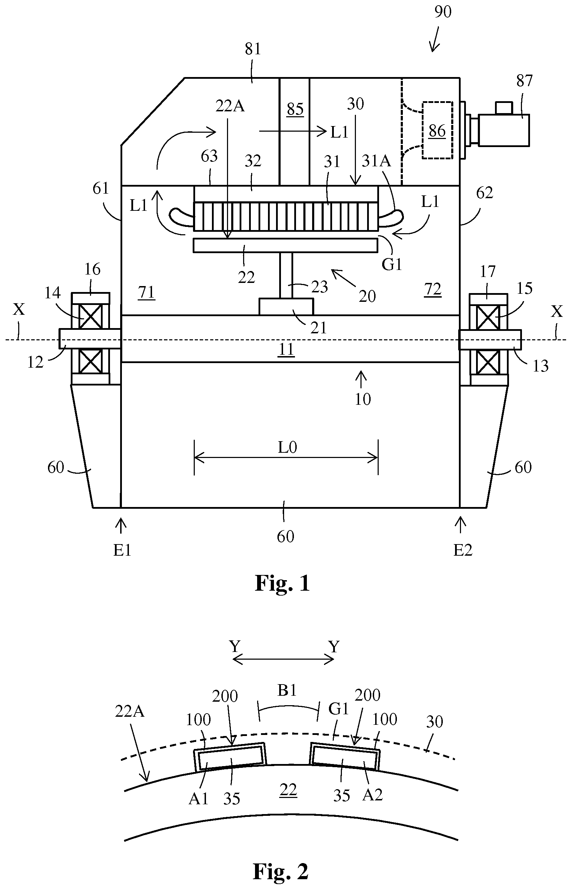

Figure 1 is an axial cross section of an electric machine. The electric machine comprises a shaft 10, a rotor 20, a stator 30, and a frame construction 60. Only the upper portion of the rotor 10 and the stator 20 is shown in the figure.

The shaft 10 comprises a middle portion 11 and two opposite end portions 12, 13. The shaft 10 is rotatably supported with bearings 14, 15 positioned in respective bearing housings 16, 17 at the frame construction 60 of the electric machine 90. The bearings 14, 15 are positioned at respective end portions 12, 13 of the shaft 10. The outer perimeter of the cross section of the rotor 20 is circular in this embodiment. The outer perimeter of the cross section of the rotor 20 could, however, be e.g. polygonal instead of circular.

The rotor 20 is attached to the middle portion 11 of the shaft 10 so that the rotor 20 rotates with the shaft 10. The rotor 20 comprises a core being formed of an inner cylinder 21 coaxial with the shaft 10, an outer cylinder 22 coaxial with the shaft 10 and positioned at a radial distance from the inner cylinder 21, and a transverse support flange 23 supporting the outer cylinder 22 at the inner cylinder 21. The inner cylinder 21 is attached to the middle portion 11 of the shaft 10. The rotor 20 comprises further an outer surface 22A having an axial length L0. The outer surface 22A is in this embodiment formed by the outer surface 22A of the outer cylinder 22.

The stator 30 surrounds the rotor 20 and is attached to the frame construction 60 of the electric machine 90. The stator 30 comprises a cylindrical stator core 31 surrounding the rotor 20 and a stator frame 32. The stator core 31 comprises a stator winding of which only the end portions 31A are shown. The end portions 31A of the stator winding protrude out from the stator core 31 at both axial X-X ends of the stator core 31. The stator frame 32 surrounds the stator core 31 and the stator core 31 is firmly attached to the stator frame 32. The stator frame 32 forms part of the frame construction 60 of the electric machine 90.

An air gap G1 is formed between the rotor 20 and the stator 30.

The frame construction 60 of the electric machine 90 comprises a first end portion 61 positioned at a first end E1 of the electric machine 90 at an axial X-X distance from first axial X-X ends of the rotor 20 and the stator 30. The frame construction 60 of the electric machine 90 comprises a second opposite end portion 62 positioned at a second end E2 of the electric machine 90 at an axial X-X distance from opposite second axial X-X ends of the rotor 20 and the stator 30. The frame construction 60 of the electric machine 90 comprises further a circumference portion 63 surrounding the stator 30.

A first end compartment 71 is formed between the first axial X-X ends of the stator 30 and the rotor 20 and the first end portion 61 of the frame construction 60 of the electric machine 90. A second end compartment 72 being opposite to the first end compartment 71 is formed between the second axial X-X ends of the stator 30 and the rotor 20 and the second end portion 62 of the frame construction 60 of the electric machine 90.

There is further an outer compartment 81 on top of the electric power generator 90. The outer compartment 81 is provided with a heat exchanger 85 and a fan 86. The fan 86 is driven by an electric motor 87 being positioned outside the outer compartment 81. Cooling air L1 is circulated with the fan 86 from the outer compartment 81 into the second end compartment 72 and further in the axial X-X direction through the rotor 10 and stator 20 to the first end compartment 71. The cooling air L1 is further directed from the first end compartment 71 into the outer compartment 81 and further through the heat exchanger 85 to the fan 86 in the outer compartment 81. The heat exchanger 85 can be an air-to-air or an air-to-water heat exchanger. There are perforations in the circumference portion 63 of the frame construction 60 between the first end compartment 71 and the outer compartment 81 and between the second end compartment 72 and the outer compartment 81. A first axial X-X cooling air channel is provided by the air gap G1 between the rotor 10 and the stator 20.

Figure 2 shows a radial cross section of a portion of the electric machine according to figure 1. Surface mounted permanent magnet modules 200 are positioned on the outer surface 22A of the outer cylinder 22 of the rotor 20 i.e. on the outer rotor surface 22A. The permanent magnet modules 200 are arranged in a plurality of rows A1, A2 distributed along a perimeter of the outer surface 22A of the rotor 20. The rows A1, A2 of permanent magnet modules 200 may be directed in an axial direction X-X on the outer surface 22A of the rotor 20. The rows A1, A2 may further be positioned at a circumferential distance B1 from each other. Each row A1, A2 comprises at least one permanent magnet module 200 extending along at least a portion of the axial length L0 of the rotor outer surface 22A. There may be a plurality of consecutive permanent magnet modules 200 in each row A1, A2 on the outer rotor surface 22A. The consecutive permanent magnet modules 200 are in such case positioned one after the other along in the row A1, A2. There may be a small axial distance between the consecutive permanent magnet modules 200. The other possibility is to arrange the opposing ends of the consecutive permanent magnet modules 200 as close to each other as possible. Each permanent magnet module 200 in each row A1, A2 of permanent magnet modules 200 comprises at least one permanent magnet 35 encapsulated in a cover 100. The rotor 20 has an axial direction X-X and a transverse direction Y-Y being perpendicular to the axial direction X-X.

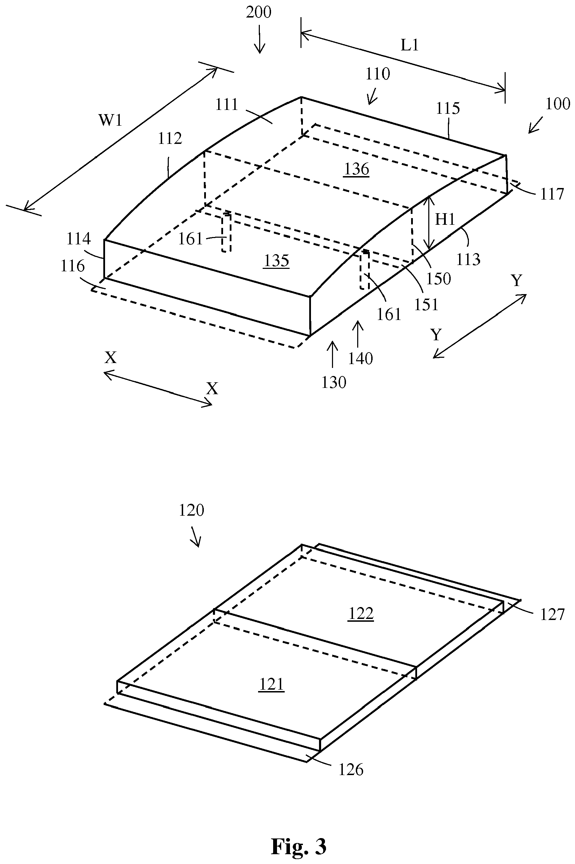

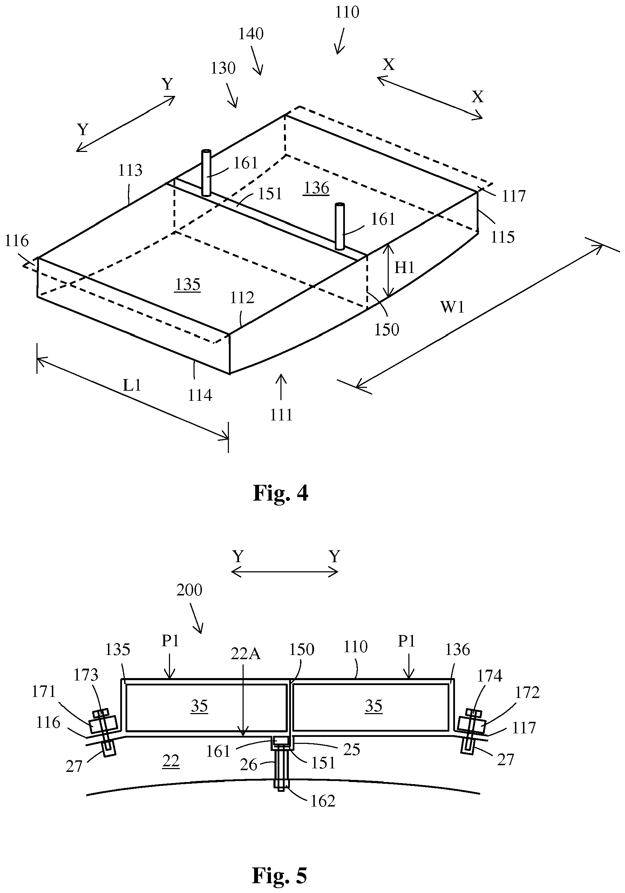

Figure 3 shows a first permanent magnet module for a rotor and figure 4 shows another view of the permanent magnet module of figure 3. The permanent magnet module 200 comprises a cover 100 and at least one permanent magnet 35 being positioned within the cover 100. The permanent magnets 35 are not shown in the figure for clarity reasons. The cover 100 comprises a top part 110 forming a compartment 130 with an open bottom 140. The top part 110 comprises a top wall 111 and four side walls 112, 113, 114, 115. The upper edges of the four side walls 112, 113, 114, 115 coincide with the side edges of the top wall 111. The first side wall 112 and the second side wall 113 positioned opposite to the first side wall 112 are parallel. The third side wall 114 and the fourth side wall 115 positioned opposite to the third side wall 114 are also parallel. The top part 110 may further be provided with extension portions 116, 117 extending outwardly in the circumferential direction from the third side wall 114 and the fourth side wall 115. These extension portions 116, 117 form flanges by means of which the permanent magnet module 200 can be attached to the rotor 20. The first side wall 112 and the second side wall 114 extend in a transverse direction Y-Y i.e. in a direction perpendicular to the axial direction X-X and the third side wall 114 and the fourth side wall 115 extend in the axial direction X-X when the rows A1, A2 of permanent magnet modules 200 extend in the axial direction X-X. The compartment 130 is divided into two sub-compartments 135, 136 with an intermediate wall 150 extending in the direction of the row A1, A2.

The cover 100 may further comprise a bottom plate 120 comprising two parts 121, 122. A first part 121 of the bottom plate 120 closes the open bottom of the first sub-compartment 135 and a second part 122 of the bottom plate 120 closes the open bottom of the second sub-compartment 136. The top wall 111 and the side walls 112, 113, 114, 115 are advantageously formed as one entity and the two parts 121, 122 of the bottom plate 120 are advantageously formed as separate entities. The two pats 121, 122 of the bottom plate 120 may be attached to the lower edges of the four side walls 112, 113, 114, 115 so that two closed compartments 135, 136 are formed within the permanent magnet module 200. Each part 121, 122 of the bottom plate 120 may be provided with extension portions 126, 127 extending outwards in the circumferential direction from the respective transverse ends of the two parts 121, 122 of the bottom plate 120. These extension portions 126, 127 form flanges by means of which the permanent magnet module 200 can be attached to the rotor 20. The upper surface of the bottom plate 120 may be planar and the lower surface of the bottom plate 120 may be planar or curved. The curvature of the lower surface of the bottom plate 120 may correspond to the curvature of the outer surface 22A of the rotor 20. A planar lower surface of the bottom plate 120 may be used when the outer surface 22A of the rotor 20 is polygonal i.e. there are straight rotor portions under each row A1, A2 of permanent magnet modules 200. A curved lower surface may be used when the outer surface 22A of the rotor 20 is circular i.e. there are curved rotor portions under each row A1, A2 of permanent magnet modules 200. The general form of the bottom plate 120 may be adapted to the general form of the top part 110 of the cover 100.

The flanges 116, 117 of the top part 110 and/or the flanges 126, 127 of the bottom plate 120 may be used to fasten the permanent magnet module 200 to the rotor 20. The permanent magnet modules 200 are thus surface mounted on the rotor 20. The permanent magnets modules 200 can be fastened e.g. with screws passing through openings in the flanges 116, 117, 126, 127 to the rotor 20. Another possibility would be to use a stiffening bar passing in the direction of the row A1, A2 on each flange 116, 117, 121, 122, whereby the screws would pass through the stiffening bar and the flanges 126, 127 to the rotor 20. Still another possibility would be to use glue to fasten the permanent magnet modules 200 to the rotor 20. Only the top part 110 could be provided with flanges 116, 117 or only the bottom plate 120 could be provided with flanges 126, 127 or both the top part 110 and the bottom plate 120 could be provided with flanges 116, 117, 126, 127. Still another possibility would be that the permanent magnet module 200 would not at all be provided with flanges 116, 117, 126, 127 in which case the permanent magnet module 200 could be attached to the rotor 20 by some other means. There could e.g. be wedge shaped support pieces engaging with the side walls 114, 115 of the top part 110 so that the permanent magnet module 200 would be pressed between the opposite wedge shaped support pieces.

The compartment 130 within the cover 100 is divided into two sub-compartments 135, 136 with the intermediate wall 150 extending in a direction of the row A1, A2. The intermediate wall 150 extends between the first side wall 112 and the second side wall 113. The height H1 of the intermediate wall 150 may correspond to the height H1 of the compartment 130 in a radial direction at the position where the intermediate wall 150 is positioned. The height H1 of the compartment 130 in the radial direction may vary in a transverse direction to the direction of the row A1, A2 when a curved top wall 111 is used, but the height H1 of the compartment 130 is uniform along a line in the direction of the row A1, A2. The intermediate wall 150 may form an integral part of the top part 110 or the intermediate wall 150 may be formed of a separate part that is fixedly attached to the top wall 111 and to the side walls 112, 113, 113, 114 of the top part 110.

The intermediate wall 150 may extend downwardly from the open bottom 140 of the compartment 130 i.e. downwardly from the bottom plane of the top part 110. The intermediate wall 150 may comprise a perpendicular lower portion 151 forming a fastening portion 151. Fastening means 161 may be fixedly attached to the fastening portion 151. The fastening means 161 may extend downwardly from the fastening portion 151 into the rotor 20. The figures show only two fastening means 161 fixedly attached to the fastening portion 151 of the intermediate wall 150, but there could be any number of fastening means 161 fixedly attached to the fastening portion 151.

The cover 100 could be used without the bottom plate 120 in which case the bottom 140 of the compartment 130 in the top part 110 would be open. In case a bottom plate 120 would be used, the bottom plate 120 could be formed of two parts 121, 122 so that the intermediate wall 150 can pass between the two parts 121, 122 downwards into the rotor 20.

Each sub-compartment 135, 136 comprises at least one permanent magnet 35 enclosed within the sub-compartment 135, 136. There may in addition to the permanent magnets 35 also be other intermediate parts which are used to form a tight fit of the permanent magnets 35 into the respective sub-compartment 135, 136. In case the bottom plate 120 is used, the permanent magnets 35 will be hermetically sealed within the cover 100. There is in such case no need to coat the permanent magnets 35 e.g. with epoxy. In case the bottom plate 120 is not used, the permanent magnets 35 could be coated e.g. with epoxy. The permanent magnet modules 200 are manufactured so that the permanent magnets 35 are attached with glue into the respective compartment 135, 136 in the top part 110 of the cover 100. In case a bottom plate 120 is used, the two parts 121, 122 of the bottom plate 120 may then be attached with glue to the permanent magnets 35 and to the lower edges of the side walls 112, 113, 114, 115 and the intermediate wall 150 in the top part 110 of the cover 100. The two parts 121, 122 of the bottom plate 120 may be attached stationary or detachably to the top part 110 of the cover 100. The whole package forming the permanent magnet module 200 may then be magnetized. The magnetized permanent magnet module 200 can then be sent from the magnet manufacturer to the rotor manufacturer where the magnetized magnet modules 200 are attached to the rotor 20. The permanent magnet modules 200 may thus be assembled and magnetized by a subcontractor separately and at a different time in relation to the manufacture of the rotor 20. The permanent magnet module 200 will thus form a rigid package and the permanent magnets 35 will be enclosed within the cover 100.

Figure 5 shows a radial cross section of a first fastening arrangement for the permanent magnet module of figures 3 and 4. The intermediate wall 150 extends downwardly from a bottom plane of the top part 110 so that the fastening portion 151 of the intermediate wall 150 is positioned in a groove 25 in the rotor 20. The groove 25 extends inwardly into the rotor 20 from the outer surface 22A of the rotor 20 and may have a rectangular cross section. The fastening portion is attached with bolts 161 to the rotor 20. An upper end of the bolts 161 is fixedly attached to the fastening portion 151. The upper end of the bolts 161 can be attached to a lower surface or to an upper surface of the fastening portion 151. The bolts 161 extend downwardly into holes 26 passing from the bottom of the grooves 25 through the rotor 20. The upper ends of the bolts 161 are positioned within the groove 25. The holes 26 in the rotor 20 extend from the bottom of the groove 25 through the outer cylinder 22 of the rotor 20. Nuts 162 can be threaded on the outer ends of the bolts 161 from the inside of the rotor 20 in order to tighten the intermediate wall 150 against the rotor 20. The permanent magnets 35 may be seated against the outer surface 22A of the rotor 20 when a bottom plate 120 is not used. The permanent magnets 35 may on the other hand be seated against the inner surface of the bottom plate 120 and the outer surface of the bottom plate 120 may be seated against the outer surface 22A of the rotor 20 when a bottom plate 120 is used. The figure shows also support bars 171, 172 positioned on the outer surface of the fastening flanges 116, 117 of the top part 110 of the cover 100. Fastening bolts 173, 174 pass through the support bars 171, 172 and through the fastening flanges 116, 117 into threaded holes 27 in the rotor 20. The cover 100 becomes thus attached to the rotor from the intermediate wall 150 and from the fastening flanges 116, 117.

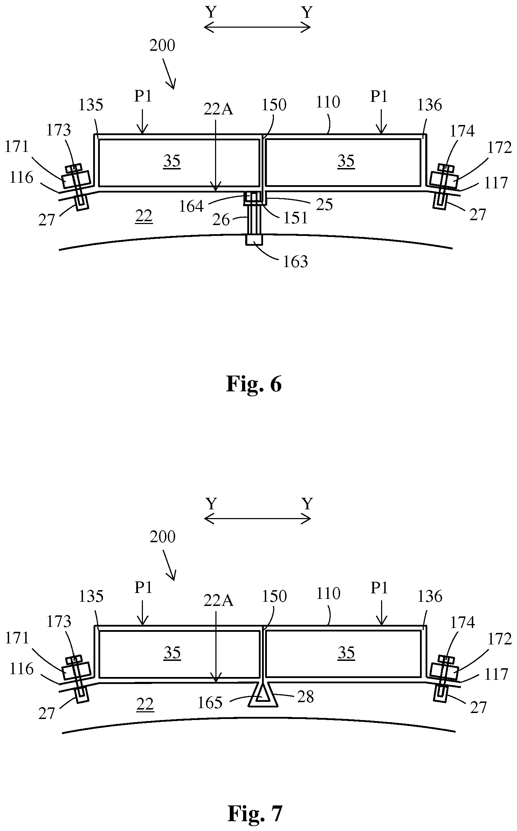

Figure 6 shows a radial cross section of a second fastening arrangement for the permanent magnet module of figures 3 and 4. This second fastening arrangement differs from that shown in figure 5 in that the bolts 163 pass from the inside of the rotor 20 through the hole 26 in the rotor 20 and further to threaded holes in a support bar 164 attached to the fastening portion 151 of the intermediate wall 150. The support bar 164 may be attached to a lower surface of the fastening portion 151 of the intermediate wall 150 or to an upper surface of the fastening portion of the intermediate wall 150. Holes are needed in the fastening portion 151 of the intermediate wall 150 when the support bar 164 is attached to the upper surface of the fastening portion 151 of the intermediate wall 150 so that the bolts 163 can pass through the fastening portion 151 of the intermediate wall 150 to the threaded holes in the support bar 164. The support bar 164 may extend on the fastening portion 151 along the length of the intermediate wall 150. The support bar 164 may be positioned within the groove 25 in the rotor 20.

Figure 7 shows a radial cross section of a third fastening arrangement for the permanent magnet module of figures 3 and 4. A wedge shaped protrusion 165 is formed as an integral part of the intermediate wall 150 or as a separate part fixedly attached to a lower edge of the intermediate wall 150. The wedge shaped protrusion 165 may extend along the whole length of the intermediate wall 150 or there may be several wedge shaped protrusions 165 on the length of the intermediate wall 150. The wedge shaped protrusion 165 extends from the lower edge of the intermediate wall 150 into a corresponding wedge shaped groove 28 in the rotor 20. The permanent magnet modules 200 can be pushed in the axial direction X-X on the rotor 20, whereby the wedge shaped protrusion or protrusions 165 glide into the wedge shape groove 28 in the rotor 20. The intermediate wall 150 becomes thus attached to the rotor 20 via the wedge shaped protrusion 165. The support bars 171, 172 and the bolts 173, 174 with which the cover 100 may be attached to the rotor 20 corresponds to the arrangement in figure 5.

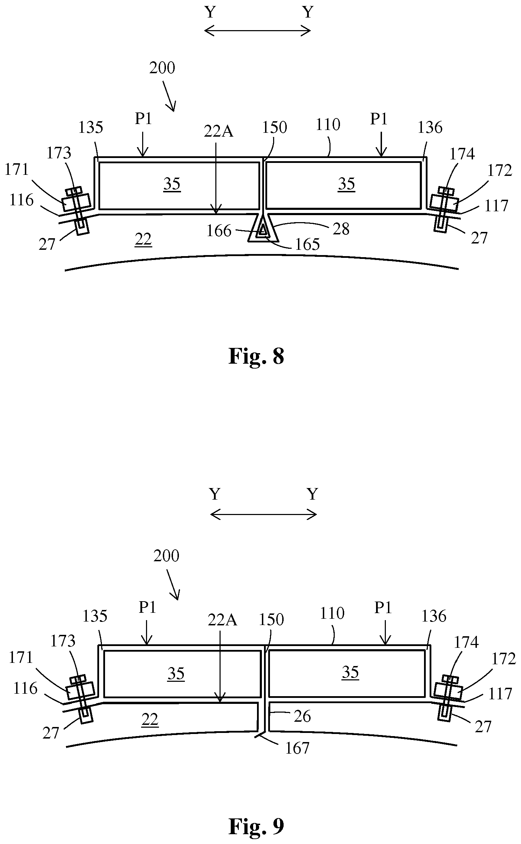

Figure 8 shows a radial cross section of a fourth fastening arrangement for the permanent magnet module of figures 3 and 4. This embodiment differs from the embodiment shown in figure 7 in that the wedge shaped protrusion 165 has a wedge shaped cavity formed in the interior of the protrusion 165. There is further a wedge shaped locking piece 166 positioned within the wedge shaped cavity in the wedge shaped protrusion 165. The locking piece 166 may be pushed into the wedge shaped cavity in the wedge shaped protrusion 165 from an axial X-X end of the rotor 20. The wedge shaped protrusion 165 becomes locked in the wedge shaped groove 28 in the rotor 20 when the locking piece 166 is pushed into the wedge shaped cavity in the wedge shaped protrusion 165.

Figure 9 shows a radial cross section of a fifth fastening arrangement for the permanent magnet module of figures 3 and 4. Attachment protrusions 167 are formed as integral portions of the intermediate wall 150 or as separate parts fixedly attached to a lower edge of the intermediate wall 150. The attachment protrusions 167 extend downwards from the lower edge of the intermediate wall 150 through holes 26 in the rotor 20. The lower edges of the attachment protrusions 167 become seated against the inside surface of the rotor 20 so that the intermediate wall 150 becomes attached to the rotor 20. The support bars 171, 172 and the bolts 173, 174 with which the cover 100 may be attached to the rotor 20 corresponds to the arrangement in figure 5.

An outer surface of each cover 100 may be coated with an electrically and magnetically non-conductive layer P1 in all embodiments of the invention. The layer P1 can be e.g. resin. The layer P1 protects the cover 100 and the permanent magnets 35 from corrosion.

The figures show only one intermediate wall 150, but there could naturally be several intermediate walls 150 in the cover 100 if needed. Each intermediate wall 150 would thus be provided with fastening means 161, 162, 163, 164, 165, 166, 167 for attaching the intermediate wall 150 to the rotor 20.

The top part 110 with the flanges 116, 117 and the intermediate wall 150 can be made of a single sheet by bending and by joining the edges in the side walls in any suitable way so that two sub-compartments 135, 136 separated by an intermediate wall 150 are formed within the top part 110. The upper edges of the two portions of the intermediate wall 150 must also be attached to each other by a suitable method when the top part 110 is made of a single sheet. Each part 121, 122 of the bottom plate 120 with the flanges 126, 127 can also be made of a single sheet. The top part 110 with the flanges 116, 117 and the intermediate wall 150 can on the other hand be made of several different sheets that are joined together at the edges in any suitable way so that two sub-compartments are formed within the top part 110. The general form of the cover 100 is rectangular in the figures, but the cover 100 could have any suitable form, e.g. circular or elliptical or polygonal. The form of the cover 100 may be adapted to the form of the permanent magnets 35 positioned within the cover 100.

The top part 110 of the cover 100 comprises a top wall and four side walls 112, 113, 114, 115 in the embodiments in the figures. This is an advantageous embodiment as the permanent magnets 35 become fully embedded within the cover 100. It would, however, also be possible that the top part 110 would comprise only two side walls 114, 115. The transverse directed Y-Y side surfaces of the top part 110 could e.g. be open and the permanent magnets 35 could be enclosed in the sub-compartments 135, 136 by the top wall 111, by the intermediate wall 150, by two axially directed X-X side walls 114, 115 and by the outer surface 22A of the rotor 20 or the bottom plate 120. The permanent magnets 35 within the cover 100 could in such an embodiment be coated with an electrically and non-magnetic protective layer in order to protect the permanent magnets against corrosion if the environment in which the rotor 20 operates is corrosive. There could be flanges 116, 117 extending outwardly from the lower edges of the side walls 114, 115 by means of which the cover 100 could be attached to the rotor 20.

The term compartment is thus to be understood in a broad sense in this application. The top part 110 forms a support structure against centrifugal forces for the at least one permanent magnet within the top part 110. The top part 110 forms thus at least an attachment clamp which forms a support for the at least one permanent magnet at least in the radial and in the circumferential direction.

The top wall 111 of the top part 110 of the cover 100 could in all embodiments of the invention be planar, curved or folded. A curved top wall 111 would have a curvature corresponding to the curvature of a circumference of a circle having the middle point on the rotor axis X-X and a radius passing along an outer perimeter of the top wall 111. A folded top wall 111 i.e. a top wall 111 where a perimeter running in the transverse direction Y-Y of the top wall 111 forms a polygonal would have a general curvature corresponding to the curvature of a circumference of a circle having the middle point on the rotor axis X-X and a radius passing along an outer perimeter of the top wall 111. The side walls 112, 113, 114, 115 of the top part 110 of the cover 100 may be perpendicular in relation to the top wall 111. The other possibility is that at least some of the side walls 112, 113, 114, 115 are inclined in relation to the top wall 111. The generally rectangular form of the cover as shown in the figures leads to four side walls 112, 113, 114, 115, but this need not be the case. A circular or elliptical form of the top part 110 of the cover 100 would lead to a situation where there is only one side wall and/or only one top wall in the top part 110 of the cover 100. The top part 110 of the cover 100 could also have the form of a hemisphere in which case there would be only a top wall or only a side wall forming the whole top part 110 of the cover 100. A polygonal form would lead to a situation where there are several side walls in the top part 110 of the cover 100.

The edges of the permanent magnets 35 that face towards each other are in each sub-compartment 135, 136 advantageously positioned against the intermediate wall 150. It is advantageous to have said edges of the permanent magnets 35 as close to each other as possible in order to reduce stray fields between the two portions in the pole. The intermediate wall 150 is for the same reason as thin as possible and formed of one sheet or of two sheets being attached to each other. There may be two sheets in the intermediate wall 150 when the cover 100 is made from one sheet by folding.

It is not necessary in the invention to provide the cover 100 with the two bottom plate 120 parts 121, 122. The cover 100 could be used without the bottom plate 120 parts 121, 122 in which case the bottom 140 of the sub-compartments 135, 136 within the cover would be open. This open bottom 140 would be closed when the cover 100 with the permanent magnets 35 would be positioned against the outer surface 22A of the rotor 20. The lower side edges of the side walls 112, 113, 114, 115 would then be seated against the outer surface 22A of the rotor 20. The permanent magnets 35 within the cover 100 could also be seated directly against the outer surface 22A of the rotor 20.

The use of the two bottom plate 120 parts 121, 122 may, however, be advantageous as it closes the open bottom 140 of the top part 110 of the cover 100. The top part 110 of the cover 100 together with the two bottom plate 120 parts 121, 122 forms a closed compartment for the permanent magnets 35 so that the permanent magnets 35 become protected against the environment acting on the outer surface 22A of the rotor 20. The permanent magnets 35 are enclosed between the two bottom plate 120 parts 121, 122 and the cup like top part 110 of the cover 100. The environment acting on the outer surface 22A of the rotor 20 could be corrosive, whereby the top part 110 and the two bottom plate 120 parts 121, 122 protect the permanent magnets 35 against corrosion. The totally enclosed permanent magnet module 200 can be manufactured independently of the manufacture of the rotor 20 by a subcontractor and transported to the rotor 20 manufacturer. A totally enclosed permanent magnet module 200 protects the permanent magnets 35 within the permanent magnet module 200 during transportation. The two bottom plate 120 parts 121, 122 also stiffen the whole construction of the permanent magnet module 200. It is also easy to achieve a curved surface with the two bottom plate 120 parts 121, 122.

The top part 110 of the cover 100 has a length L1 in the axial direction X-X and a width W1 in the transverse direction Y-Y regardless of the form of the top part of the cover 100. The length L1 of the top part 110 of the cover 100 in the axial direction X-X is determined by the maximum dimension of the top part 110 of the cover 100 in the axial direction X-X. The width W1 of the cover 100 in the transverse direction Y-Y is determined by the maximum dimension of the top part 110 of the cover 100 in the transverse direction Y-Y.

The rows A1, A2 of permanent magnet modules 200 are axially directed X-X in the figures. The rows A1, A2 of permanent magnet modules 200 could, however, be directed in a small angle in relation to the axial direction X-X. It would also be possible that the permanent magnet modules 200 in the rows A1, A2 forming an angle with the axial direction X-X are staggered in relation to each other. Each permanent magnet module 200 would thus be directed in the axial direction X-X, but slightly staggered in relation to the adjacent permanent magnet modules 200. The rows A1, A2 could deviate 0 to 3 degrees from the axial direction X-X.

The permanent magnet modules 200 in each row A1, A2 in the figures extend only along a portion of the axial length L0 of the outer surface 22A of the rotor 20. The permanent magnet module 200 could, however, extend along the whole axial length L0 of the outer surface 22A of the rotor 20. The cover 100 would then extend along the whole axial length L0 of the outer surface 22A of the rotor 20. Each sub-compartment 135, 136 of the cover 100 may in such case comprise several consecutive permanent magnets 35 along the axial length L0 of the outer surface 22A of the rotor 20.

The top part 110 and the two bottom plate 120 parts 121, 122 of the cover 100 can be made of metal, advantageously of stainless steel or of composite material, e.g. of carbon fibre or Kevlar. The thickness of the material of the top part 110 of the cover 100 may be in the range of 1 to 2 mm.

The axial X-X length L1 of the permanent magnet modules 200 may be in the order of 100 to 150 mm. This is due to the fact that the magnetizing equipment cannot normally handle longer permanent magnet modules 200. There could be 6 to 10 permanent magnet modules 200 in each row A1, A2.

The permanent magnets 35 in the permanent magnet module 200 may be made of a powder like magnetic material that is compressed to form the permanent magnet 35. The permanent magnets 35 may thus be fragile, whereby the cover 100 forms a protection and a support structure for the permanent magnets 35. The cover 100 can easily be provided with suitable fastening means through which the whole package forming the permanent magnet module 200 can then be attached to the outer surface 22A of the rotor 20.

The invention is naturally not limited to the electric machine 90 disclosed in the figures, but can be applied in any electric machine 90 fulfilling the requirements of claim 1. The rotor 20 shown in the figures is just one example of a rotor 20 for an electric machine 90, where the invention can be applied. The invention can be applied in any kind of rotor 20 having an outer surface 22A provided with surface mounted magnet modules 35.

The cooling of the electric machine 90 shown in the figures is an asymmetric cooling. The cooling air L1 circuit passes radially from the fan 86 into the second compartment 72, axially X-X through the electric power generator to the first compartment 71, radially out to the outer compartment 81 and through the heat exchanger 85 back to the fan 86.

The invention can advantageously be applied in an electric machine comprising the rotor and having a power of at least 5 MW, advantageously at least 10 MW. The shaft height of the electric machine comprising the rotor is advantageously at least 1.0 m. The rotation speed of the electric machine comprising the rotor is in the range of 150 to 700 rpm. Radial cooling through radial air ducts in the rotor or stator are not normally used due to the slow rotation speed of the electric machine 90. An external fan 86 is thus used in order to circulate cooling air in the electric machine 90 comprising the rotor.

The electric machine 90 comprising the rotor is advantageously connected to the electric grid through a frequency converter.

The stator 30 of the electric machine 90 could advantageously be cooled e.g. by a water cooling circuit adapted to the stator 30.

The electric machine 90 comprising the rotor may be an electric motor or an electric generator. The electric machine 90 is advantageously a generator in a wind power plant, said generator being connected to the electric grid be means of a frequency converter. The rotation speed of the generator will thus be varying depending on the wind speed, which means that the generator must be connected to the electric grid by means of a frequency converter in order to be able to maintain the frequency of electric power that is supplied to the grid at a constant level.

The invention is not limited to the electric machine 90 disclosed in the figures. The invention can be applied in any permanent magnet electric machine. The construction of the rotor 20 could deviate from that disclosed in the figures. The outer surface 22A of the rotor 20 could be circular or polygonal or provided with circular portions or straight portions separated by cavities extending inwardly into the rotor 20.

The invention is not limited to the examples described above but may vary within the scope of the claims.

## Claims

1. A rotor for an electric machine,
the rotor (20) having an axial direction (X-X) and a transverse direction (Y-Y) being perpendicular to the axial direction (X-X),
the rotor (20) comprising an outer surface (22A) with an axial length (L0), the outer surface (22A) of the rotor (20) being provided with a plurality of rows (A1, A2) of surface mounted permanent magnet modules (200) distributed along a perimeter of the outer surface (22A) of the rotor (20) and extending in the axial direction, each row (A1, A2) comprising at least one surface mounted permanent magnet module (200),
the permanent magnet module (200) comprising a cover (100) having a top part (110) forming a compartment (130) with a height (H1) in a radial direction,
the top part (110) of the cover (100) comprising at least one intermediate wall (150) extending in the direction of the row (A1, A2) or in the axial direction (X-X) over the whole height (H1) of the compartment (130) and dividing the compartment (130) into at least two separate sub-compartments (135, 136), each of the sub-compartments (135, 135) housing at least one permanent magnet (35),
the at least one intermediate wall (150) extending below a lower surface of the top part (110) into a groove (25, 28) formed in the rotor (20) and comprising fastening means (161, 162, 163, 164, 165, 166, 167) at a lower edge of the at least one intermediate wall (150) within the groove (25, 26) in the rotor (20) in order to attach the at least one intermediate wall (150) to the rotor (20).

2. The rotor according to claim 1, **characterized in that** the intermediate wall (150) comprises a fastening portion (151) at a lower edge of the intermediate wall (150), said fastening portion (151) being perpendicular to the intermediate wall (150) and being positioned in the groove (25, 28) in the rotor (20).

3. The rotor according to claim 2, **characterized in that** the intermediate wall (150) is attached to the rotor (20) with bolts (161), an upper end of the bolts (161) being fixedly attached to the fastening portion (151) within the groove (25) of the rotor (25), the bolts (161) passing from the bottom of the groove (25) through holes (26) in the rotor (20) to an inside of the rotor (20), whereby nuts (162) can be threaded on the ends of the bolts (161) from an inside of the rotor (20) in order to attach the intermediate wall (150) to the rotor (20).

4. The rotor according to claim 2, **characterized in that** the intermediate wall (150) is attached to the rotor (20) with bolts (163) passing from an inside of the rotor (20) through holes (26) in the rotor (20) to the bottom of the groove (25) and further to threaded holes in a support bar (164) being attached to the fastening portion (151) of the intermediate wall (150), the support bar (164) being positioned in the groove (25) in the rotor (20), whereby the bolts (163) can be tightened from the inside of the rotor (20) in order to attach the intermediate wall (150) to the rotor (20).

5. The rotor according to claim 1, **characterized in that** the intermediate wall (150) comprises wedge shaped protrusions (165) extending downwards from a lower edge of the intermediate wall (150) into a wedge shaped groove (28) in the rotor (20), whereby the permanent magnet modules (200) are pushed in the axial (X-X) direction on the outer surface (22A) of the rotor (20) so that the wedge shaped protrusions (165) glide into the wedge shaped groove (28), whereby the intermediate wall (150) becomes attached to the rotor (20).

6. The rotor according to claim 5, **characterized in that** the wedge shaped protrusions (165) comprise a wedge shaped cavity in the interior of each wedge shaped protrusion (165), a wedge shaped locking piece (166) being pushed into the wedge shaped cavity in the wedge shaped protrusion (165) in order to lock the wedge shaped protrusion (165) in the wedge shaped groove (28) in the rotor (20), whereby the intermediate wall (150) becomes attached to the rotor (20).

7. The rotor according to claim 1, **characterized in that** the intermediate wall (150) is attached to the rotor (20) with attachment protrusions (167) extending downwards from a lower edge of the intermediate wall (150) through holes (26) in the rotor (20), an inner end of the attachment protrusions (167) being seated against an inner surface of the rotor (20) when the attachment protrusions (167) pass through the holes (26) in the rotor, whereby the intermediate wall (150) becomes attached to the rotor (20).

8. The rotor according to any one of claims 1 to 7, **characterized in that** the cover (100) comprises further a bottom plate (120) comprising two parts (121, 122), each of the parts (121, 122) closing a bottom of a respective compartment (135, 136) in the cover (100), the parts (121, 122) of the bottom plate (120) being positioned against the outer surface (22A) of the rotor (20).

9. The rotor according to any one of claims 1 to 8, **characterized in that** the top part of the cover (100) comprises a top wall (111) and at least two side walls (114, 115), an upper edge of each of the side walls (114, 115) coinciding with corresponding side edges of the top wall (111) and a lower edge of each of the side walls (114, 115) seating against the outer surface (22A) of the rotor (20) or against the bottom plate (120), whereby each sub-compartment (135, 136) enclosing the at least one permanent magnet (35) is restricted by the top wall (111), the intermediate wall (150), a side wall (114, 115) and the outer surface (22A) of the rotor (20) or the bottom plate (120).

10. The rotor according to claim 9, **characterized in that** the top part of the cover (100) comprises a top wall (111) and four side walls (112, 113, 114, 115).

11. The rotor according to any one of claims 1 to 10, **characterized in that** the cover (100) further comprises flanges (116, 117, 126, 127) by means of which the cover (100) may be attached to the rotor (20).

12. The rotor according to any one of claims 1 to 11, **characterized in that** the cover (100) is made of metal, advantageously of stainless steel.

13. The rotor according to any one of claims 1 to 12, **characterized in that** the power of the electric machine provided with the rotor is at least 5 MW.

14. The rotor according to any one of claims 1 to 13, **characterized in that** the electric machine provided with the rotor is connected to the electric grid through a frequency converter.

## Patentansprüche

1. Rotor für eine elektrische Maschine,
wobei der Rotor (20) eine axiale Richtung (X-X) und eine Quer-Richtung (Y-Y) hat, die senkrecht zu der axialen Richtung (X-X) ist,
der Rotor (20) eine Außenfläche (22A) mit einer axialen Länge (LO) umfasst, und die Außenfläche (22A) des Rotors (20) mit einer Vielzahl von Reihen (A1, A2) oberflächenmontierter Permanentmagnet-Module (200) versehen ist, die an einem Umfang der Außenfläche (22A) des Rotors (20) verteilt sind und sich in der axialen Richtung erstrecken und jede Reihe (A1, A2) wenigstens ein oberflächenmontiertes Permanentmagnet-Modul (200) umfasst,
das Permanentmagnet-Modul (200) eine Abdeckung (100) umfasst, die einen oberen Teil (110) hat, der eine Kammer (130) mit einer Höhe (H1) in einer radialen Richtung bildet,
der obere Teil (110) der Abdeckung (100) wenigstens eine Zwischenwand (150) umfasst, die sich in der Richtung der Reihe (A1, A2) oder in der axialen Richtung (X-X) über die gesamte Höhe (H1) der Kammer (130) verläuft und die Kammer (130) in wenigstens zwei separate Teilkammern (135, 136) unterteilt, wobei jede der Teilkammern (135, 135) wenigstens einen Permanentmagneten (35) aufnimmt,
die wenigstens eine Zwischenwand (150) sich unterhalb einer unteren Fläche des oberen Teils (110) in eine Nut (25, 28) hinein erstreckt, die in dem Rotor (20) ausgebildet ist und Befestigungseinrichtungen (161, 162, 163, 164, 165, 166, 167) an einer Unterkante der wenigstens einen Zwischenwand (150) im Inneren der Nut (25, 26) in dem Rotor (20) umfasst, um die wenigstens eine Zwischenwand (150) an dem Rotor (20) anzubringen.

2. Rotor nach Anspruch 1, **dadurch gekennzeichnet, dass** die Zwischenwand (150) einen Befestigungsabschnitt (151) an einer Unterkante der Zwischenwand (150) umfasst, wobei der Befestigungsabschnitt (151) senkrecht zu der Zwischenwand (150) ist und in der Nut (25, 28) in dem Rotor (20) positioniert ist.

3. Rotor nach Anspruch 2, **dadurch gekennzeichnet, dass** die Zwischenwand (150) an dem Rotor (20) mit Schrauben (161) befestigt ist, wobei ein oberes Ende der Schrauben (161) fest an dem Befestigungsabschnitt (151) im Inneren der Nut (25) des Rotors (25) angebracht ist und die Schrauben (161) über den Boden der Nut (25) durch Löcher (26) in dem Rotor (20) in einen Innenraum des Rotors (20) eintreten, so dass Muttern (162) auf die Enden der Schrauben (161) über einen Innenraum des Rotors (20) aufgeschraubt werden können, um die Zwischenwand (150) an dem Rotor (20) anzubringen.

4. Rotor nach Anspruch 2, **dadurch gekennzeichnet, dass** die Zwischenwand (150) an dem Rotor (20) mit Schrauben (163) angebracht ist, die über einen Innenraum des Rotors (20) durch Löcher (26) in dem Rotor (20) zu dem Boden der Nut (25) und weiter zu Gewindelöchern in einer Tragestange (164) hindurchtreten, die an dem Befestigungsabschnitt (151) der Zwischenwand (150) angebracht ist, wobei die Tragestange (164) in der Nut (25) in dem Rotor (20) positioniert ist, so dass die Schrauben (163) über den Innenraum des Rotors (20) angezogen werden können, um die Zwischenwand (150) an dem Rotor (20) anzubringen.

5. Rotor nach Anspruch 1, **dadurch gekennzeichnet, dass** die Zwischenwand (150) keilförmige Vorsprünge (165) umfasst, die sich von einer Unterkante der Zwischenwand (150) in eine keilförmige Nut (28) in dem Rotor (20) hinein erstrecken, so dass die Permanentmagnet-Module (200) in der axialen Richtung (X-X) an der Außenfläche (22A) des Rotors gedrückt werden und die keilförmigen Vorsprünge (165) in die keilförmige Nut (28) hinein gleiten und dadurch die Zwischenwand (150) an dem Rotor (20) angebracht wird.

6. Rotor nach Anspruch 5, **dadurch gekennzeichnet, dass** die keilförmigen Vorsprünge (165) einen keilförmigen Hohlraum in dem Innenraum jedes keilförmigen Vorsprungs (165) umfassen, wobei ein keilförmiges Arretierteil (166) in den keilförmigen Hohlraum in dem keilförmigen Vorsprung (165) gedrückt wird, um den keilförmigen Vorsprung (165) in der keilförmigen Nut (28) in dem Rotor (20) zu arretieren, so dass die Zwischenwand (150) an dem Rotor (20) angebracht wird.

7. Rotor nach Anspruch 1, **dadurch gekennzeichnet, dass** die Zwischenwand (150) an dem Rotor (20) mit Anbringungs-Vorsprüngen (167) angebracht ist, die sich von einer Unterkante der Zwischenwand (150) durch Löcher (26) in dem Rotor (20) nach unten erstrecken, wobei ein inneres Ende der Anbringungs-Vorsprünge (167) an einer Innenfläche des Rotors (20) anliegt, wenn die Anbringungs-Vorsprünge (167) durch die Löcher (26) in dem Rotor hindurchtreten, so dass die Zwischenwand (150) an dem Rotor (20) angebracht wird.

8. Rotor nach einem der Ansprüche 1 bis 7, **dadurch gekennzeichnet, dass** die Abdeckung (100) des Weiteren eine Bodenplatte (120) umfasst, die zwei Teile (121, 122) umfasst, wobei jeder der Teile (121, 122) einen Boden einer entsprechenden Kammer (135, 136) in der Abdekkung (100) verschließt, und die Teile (121, 122) der Bodenplatte (21) an der Außenfläche (22A) des Rotors (20) positioniert sind.

9. Rotor nach einem der Ansprüche 1 bis 8, **dadurch gekennzeichnet, dass** der obere Teil der Abdeckung (100) eine Oberwand (111) sowie wenigstens zwei Seitenwände (114, 115) umfasst, wobei sich eine Oberkante jeder der Seitenwände (114, 115) mit entsprechenden Seitenkanten der oberen Wand (111) deckt und eine Unterkante jeder der Seitenwände (114, 115) an der Außenfläche (22A) des Rotors (20) oder an der Bodenplatte (120) anliegt, so dass jede Teilkammer (135, 136), die den wenigstens einen Permanentmagneten (35) umschließt, durch die Oberwand (111), die Zwischenwand (150), eine Seitenwand (114, 115) sowie die Außenfläche (22A) des Rotors (20) oder die Bodenplatte (120) begrenzt wird.

10. Rotor nach Anspruch 9, **dadurch gekennzeichnet, dass** der obere Teil der Abdeckung (100) eine Oberwand (111) und vier Seitenwände (112, 113, 114, 115) umfasst.

11. Rotor nach einem der Ansprüche 1 bis 10, **dadurch gekennzeichnet, dass** die Abdekkung (100) des Weiteren Flansche (116, 117, 126, 127) umfasst, mit denen die Abdeckung (100) an dem Rotor (20) angebracht werden kann.

12. Rotor nach einem der Ansprüche 1 bis 11, **dadurch gekennzeichnet, dass** die Abdekkung (100) aus Metall, vorzugsweise rostfreiem Stahl, besteht.

13. Rotor nach einem der Ansprüche 1 bis 12, **dadurch gekennzeichnet, dass** die Leistung der mit dem Rotor versehenen elektrischen Maschine wenigstens 5 MW beträgt.

14. Rotor nach einem der Ansprüche 1 bis 13, **dadurch gekennzeichnet, dass** die mit dem Rotor versehene elektrische Maschine über einen Frequenzwandler mit dem Stromversorgungsnetz verbunden ist.

## Revendications

1. Rotor pour une machine électrique,
le rotor (20) présentant une direction axiale (X-X) et une direction transversale (Y-Y) étant perpendiculaire à la direction axiale (X-X),
le rotor (20) comprenant une surface externe (22A) présentant une longueur axiale (L0), la surface externe (22A) du rotor (20) étant dotée d'une pluralité de rangées (Al, A2) de modules magnétiques permanents montés en surface (200) répartis le long d'un périmètre de la surface externe (22A) du rotor (20) et s'étendant dans la direction axiale, chaque rangée (Al, A2) comprenant au moins un module magnétique permanent monté en surface (200),
le module magnétique permanent (200) comprenant un capot (100) disposant d'une partie supérieure (110) formant un compartiment (130) présentant une hauteur (H1) dans une direction radiale,
la partie supérieure (110) du capot (100) comprenant au moins une paroi intermédiaire (150) s'étendant dans la direction de la rangée (Al, A2) ou dans la direction axiale (X-X) au-dessus de la hauteur globale (H1) du compartiment (130) et divisant le compartiment (130) en au moins deux sous-compartiments séparés (135, 136), chacun des sous-compartiments (135, 136) abritant au moins un aimant permanent (35),
l'au moins une paroi intermédiaire (150) s'étendant au-dessous d'une surface inférieure de la partie supérieure (110) dans une rainure (25, 28) formée dans le rotor (20) et comprenant un moyen de fixation (161, 162, 163, 164, 165, 166, 167) sur une arête inférieure de l'au moins une paroi intermédiaire (150) au sein de la rainure (25, 26) dans le rotor (20) afin de fixer l'au moins une paroi intermédiaire (150) au rotor (20).

2. Le rotor selon la revendication 1, **caractérisé en ce que** la paroi intermédiaire (150) comprend une partie de fixation (151) au niveau d'une arête inférieure de la paroi intermédiaire (150), ladite partie de fixation (151) étant perpendiculaire à la paroi intermédiaire (150) et étant positionnée dans la rainure (25, 28) dans le rotor (20) .

3. Le rotor selon la revendication 2, **caractérisé en ce que** la paroi intermédiaire (150) est rattachée au rotor (20) au moyen de boulons (161), une extrémité supérieure des boulons (161) étant rattachée de manière fixe à la partie de fixation (151) au sein de la rainure (25) du rotor (25), les boulons (161) passant depuis le fond de la rainure (25) à travers des trous (26) dans le rotor (20) vers une partie intérieure du rotor (20), dans lequel des écrous (162) peuvent être filetés sur les extrémités des boulons (161) depuis une partie intérieure du rotor (20) pour fixer la paroi intermédiaire (150) au rotor (20) .

4. Le rotor selon la revendication 2, **caractérisé en ce que** la paroi intermédiaire (150) est fixée au rotor (20) au moyen de boulons (163) passant depuis une partie intérieure du rotor (20) à travers des trous (26) dans le rotor (20) au fond de la rainure (25) et plus avant à des trous filetés dans une barre de soutien (164) étant rattachée à la partie de fixation (151) de la paroi intermédiaire (150), la barre de soutien (164) étant positionnée dans la rainure (25) dans le rotor (20), dans lequel les boulons (163) peuvent être serrés depuis l'intérieur du rotor (20) pour rattacher la paroi intermédiaire (150) au rotor (20).

5. Le rotor selon la revendication 1, **caractérisé en ce que** la paroi intermédiaire (150) comprend des protrusions de forme triangulaire (165) s'étendant vers le bas depuis une arête inférieure de la paroi intermédiaire (150) dans une rainure de forme triangulaire (28) dans le rotor (20), dans lequel les modules magnétiques permanents (200) sont poussés dans la direction axiale (X-X) sur la surface externe (22A) du rotor (20) de sorte que les protrusions de forme triangulaire (165) coulissent dans la rainure de forme triangulaire (28), dans lequel la paroi intermédiaire (150) devient rattachée au rotor (20).

6. Le rotor selon la revendication 5, **caractérisé en ce que** les protrusions de forme triangulaire (165) comprennent une cavité de forme triangulaire à l'intérieur de chaque protrusion de forme triangulaire (165), une pièce de verrouillage de forme triangulaire (166) étant poussée dans la cavité de forme triangulaire dans la protrusion de forme triangulaire (165) afin de verrouiller la protrusion de forme triangulaire (165) dans la rainure de forme triangulaire (28) dans le rotor (20), dans lequel la paroi intermédiaire (150) devient rattachée au rotor (20) .

7. Le rotor selon la revendication 1, **caractérisé en ce que** la paroi intermédiaire (150) est rattachée au rotor (20) par des protrusions de fixation (167) s'étendant vers le bas depuis une arête inférieure de la paroi intermédiaire (150) à travers des trous (26) dans le rotor (20), une extrémité interne des protrusions de fixation (167) étant appuyées contre une surface interne du rotor (20) lorsque les protrusions de fixation (167) traversent les trous (26) dans le rotor, dans lequel la paroi intermédiaire (150) devient rattachée au rotor (20).

8. Le rotor selon l'une quelconque des revendications 1 à 7, **caractérisé en ce que** le capot (100) comprend en outre une plaque de fond (120) comprenant deux parties (121, 122), chacun des parties (121, 122) fermant un fond d'un compartiment respectif (135, 136) dans le capot (100), les parties (121, 122) de la plaque de fond (120) étant positionnées contre la surface externe (22A) du rotor (20) .

9. Le rotor selon l'une quelconque des revendications 1 à 8, **caractérisé en ce que** la partie supérieure du capot (100) comprend une paroi supérieure (111) et au moins deux parois latérales (114, 115), une arête supérieure de chacune des parois latérales (114, 115) coïncidant avec des arêtes latérales correspondantes de la paroi supérieure (111) et une arête inférieure de chacune des parois latérales (114, 115) s'appuyant contre la surface externe (22A) du rotor (20) ou contre la plaque de fond (120), dans lequel chaque sous-compartiment (135, 136) enfermant l'au moins un aimant permanent (35) est restreint par la paroi supérieure (111), la paroi intermédiaire (150), une paroi latérale (114, 115) et la surface externe (22A) du rotor (20) ou de la plaque de fond (120).

10. Le rotor selon la revendication 9, **caractérisé en ce que** la partie supérieure du capot (100) comprend une paroi supérieure (111) et quatre parois latérales (112, 113, 114, 115).

11. Le rotor selon l'une quelconque des revendications 1 à 10, **caractérisé en ce que** le capot (100) comprend en outre des brides (116, 117, 126, 127) au moyen desquelles le capot (100) peut être rattaché au rotor (20).

12. Le rotor selon l'une quelconque des revendications 1 à 11, **caractérisé en ce que** le capot (100) est constitué de métal, préférablement d'acier inoxydable.

13. Le rotor selon l'une quelconque des revendications 1 à 12, **caractérisé en ce que** la puissance de la machine électrique dotée du rotor est d'au moins 5 MW.

14. Le rotor selon l'une quelconque des revendications 1 à 13, **caractérisé en ce que** la machine électrique dotée du rotor est connectée au réseau électrique via un convertisseur de fréquence.
